(19) Europäisches Patentamt
European Patent Office
Office européen des brevets

(11) **EP 4 418 660 A1**

(12) **EUROPEAN PATENT APPLICATION**

(43) Date of publication:
**21.08.2024 Bulletin 2024/34**

(21) Application number: **23167530.7**

(22) Date of filing: **12.04.2023**

(51) International Patent Classification (IPC):
*H04N 21/242* (2011.01)   *H04N 21/414* (2011.01)
*H04N 21/43* (2011.01)   *H04N 21/439* (2011.01)
*H04N 21/8547* (2011.01)   *H04L 65/75* (2022.01)

(52) Cooperative Patent Classification (CPC):
**H04N 21/242; H04L 65/612; H04L 65/762;**
**H04L 65/765; H04L 65/80; H04N 21/41407;**
**H04N 21/41415; H04N 21/4307; H04N 21/4392;**
**H04N 21/8547**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **16.02.2023 KR 20230021021**

(71) Applicant: **Yuyu Korea Co., Ltd**
**Seoul 04799 (KR)**

(72) Inventor: **KIM, Hyun Soo**
**04984 Seoul (KR)**

(74) Representative: **Weickmann & Weickmann**
**PartmbB**
**Postfach 860 820**
**81635 München (DE)**

(54) **METHOD FOR WIRELESS WI-FI TRANSMISSION OF DIGITAL SOUND WITH SOUND SYNCHRONIZING TECHNOLOGY APPLIED**

(57) The present invention relates to a system for wireless Wi-Fi transmission of digital sound with sound synchronization technology applied capable of maintaining synchronization of the video and audio in an optimal state by causing a streaming server to transmit specific information data to a receiving device in every packet transmission and an audio play app of the receiving device to analyze information data of packet data being implemented/executed and the received packet data and cope with immediately when synchronization is out of sync.

Fig. 1

EP 4 418 660 A1

**Description**

**BACKGROUND**

**1. FIELD**

The present invention relates to a method for wireless Wi-Fi transmission of digital sound with sound synchronization technology applied, and more particularly, to wireless Wi-Fi transmission of digital sound with sound synchronization technology applied, which is a method of transmitting a digital audio signal, such as audio of a digital cinema content standard, as well as audio of a microphone or other analog type via a wireless network by loading a synchronization signal on the digital audio signal and the audio of the microphone or other analog type, and transmitting the audio signals via Wi-Fi so that video and sound may be synchronized by utilizing the loaded synchronization signal, capable of realizing video and sound in various environments by more conveniently and easily implementing all videos including audio without restrictions such as cable connection.

**2. DESCRIPTION OF RELATED ART**

Regarding a conventional drive-in theater, after a ticket office is installed at an entrance of a wide empty lot and a large screen is installed in front of the empty lot, a car is parked in front of the screen so that video projected on the screen is watched in the car, and audio is transmitted in an FM radio so that a car stereo's radio may receive and listen to the audio.

However, since the FM radio structure of the projection system of the conventional drive-in theater may not meet radio station installation operations and rules of the current Radio Act and the Enforcement Decree of the Radio Act, and does not correspond to wireless stations that may be opened without reporting, legal wireless sound transmission in a drive-in theater is virtually non-existent.

Accordingly, in a situation where the need for a non-face-to-face and non-contact means is emerging, a realistically safe method of attracting and gathering customers is required, so demand for drive-in theaters is increasing. Therefore, it is necessary to propose a method for transmitting a sound signal that may legally operate a drive-in theater by replacing the existing FM propagation method.

However, when transmitting the digital sound signal to a wireless network using Wi-Fi, this audio transmission interval varies depending on the network environment or situations, and due to this variability, the synchronization of the video and audio may be out of sync. Moreover, when a size per packet of audio transmitted wirelessly is too low, the quality of the audio is degraded, and when a size per packet of audio transmitted wirelessly is too large, problems that are difficult to cope with transmission errors may occur. It can be seen that the detailed causes may include a case where a network rate is slowed down due to reasons such as environment, a case where a packet loss occurs due to network conditions, a case where buffer underrun occurs, or the like. In addition, when sound is wirelessly transmitted via Wi-Fi in addition to the existing wireless transmission environment of sound through FM, a time difference between two sounds may occur due to the difference in signal processing between digital and analog.

Accordingly, there is a growing need for technology development to solve the problem with the audio being out of synchronization for smooth video viewing even when audio is wirelessly transmitted.

Meanwhile, the above-described background art is technical information retained by the inventor to derive the present disclosure or acquired by the inventor while deriving the present disclosure, and thus should not be construed as art that was publicly known prior to the filing date of the present disclosure.

[Related Art Document]

[Patent Document]

(Patent Document 1) Korean Patent Publication No. 10-2252541

**SUMMARY**

One aspect of the present invention provides a technology of synchronizing video and sound when converting a sound signal of digital content according to the international standard (Digital Cinema Package (DCI)) for digital cinema content without modulation and streaming so that a mobile device may receive a sound signal of a digital content layer through Wi-Fi communication, and more specifically, a method for wireless Wi-Fi transmission of digital sound with sound synchronization technology applied capable of maintaining synchronization of the video and audio in an optimal state by causing a streaming server to transmit specific information data to a receiving device in every packet transmission and an audio play app of the receiving device to analyze information data of packet data being implemented/executed and the received packet data and cope with immediately when synchronization is out of sync, simultaneously support a digital output and a general analog output of a sound signal so that they may be used in a wireless transmission environment through an existing FM, and correcting a time difference between analog and digital by confirming that the time difference between the digital type and the analog type does not occur.

Technical problems of the present disclosure are not limited to the above-mentioned objects. That is, other technical problems that are not mentioned may be obviously understood by those skilled in the art from the following description.

In an aspect of the present disclosure, a system for wireless Wi-Fi transmission of digital sound with sound synchronization technology applied includes: a digital projection device that stores and outputs digital content; a streaming server that is connected to the digital projection device and transmitting digital cinema contents received from the digital projection device to an access point; and a mobile device that receives a sound signal of a digital cinema content transmitted from the streaming server through the access point, and is connected to a sound output device through wired or wireless communication so that a sound signal of the digital cinema content is output through the sound output device.

The streaming server may simultaneously support digital output and general analog output of a sound signal so that they may be used in a wireless transmission environment through existing FM, and at this time, store the analog audio signal in a buffer until a time when a digitally converted audio signal is output according to a program recorded in a built-in digital signal processor (DSP) so that a time difference between the digital and analog types does not occur.

The streaming server may convert an audio signal of the digital cinema content into a packet in units of predetermined frames, and transmit the converted packet to the access point before a video signal of the digital cinema content by a predetermined time, and transmit the converted packet to each packet to the access point along with a packet number assigned to each packet, and

the mobile device may record a plurality of received packets in a form of a loop array, and record the total number of received packets and a storage location of the packets together, and control the sound to be played when the sum of the received packets recorded in the form of the loop array fills up an audio buffer in memory, but record an audio playback time and a currently implemented packet location from when the sound is implemented.

The mobile device may

1) calculate the required number n of packets, which is the number of packets required for audio transmission, and compare the required number of packets (n) and the total number t of received packets in real time while streaming is in progress,

determine that the transmitted packet has not yet been received due to a network speed delay when the required number of packets is less than the total number of received packets, and terminate and then reconnect the network, set the total number of packets to t + 1, and correct the packet location with packets increased by n, determine that packets congested due to the network speed delay rushes in at once and received when the required number of packets is greater than the total number of received packets, terminate and reconnect the network, set the total number of packets to t-1, and correct the packet location with packets reduced by n,

2) determine that the packet is lost when a sequence number added to a packet header transmitted from the streaming server and a sequence number confirmed by an application of the mobile device are not consecutive, and transmit the sound by replacing a next packet of the lost packet, and terminate and then reconnect the network of the device, and

3) when there is not enough packet data left in the audio buffer because the recorded packet buffer size is less than an audio buffer size,

record a size of accumulated buffer data transmitted to the audio buffer from the memory where the packet is received, record a size of actual output and implemented audio data in the audio buffer, and calculate the size of the implemented audio data from the size of the accumulated buffer data to calculate a size of a buffer waiting for audio transmission, and compare the calculated size of the standby buffer with a minimum buffer size required to implement the sound, and when the size of the standby buffer is smaller than the size of the minimum buffer, record the same packet as the currently playing received packet once more.

**BRIEF DESCRIPTION OF DRAWINGS**

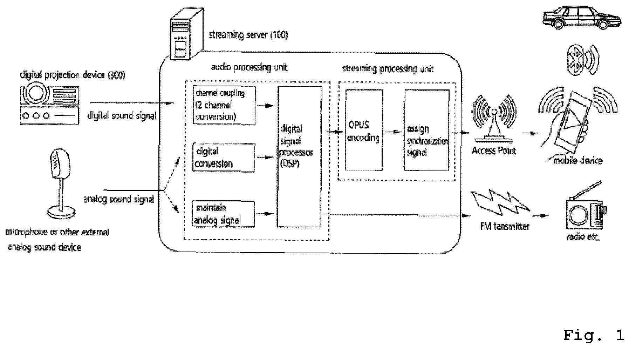

FIG. 1 is a diagram illustrating a schematic configuration of a system for synchronizing video and sound in wireless digital transmission of sound using Wi-Fi according to an embodiment of the present invention.

**DETAILED DESCRIPTION**

The detailed description of the present invention set forth below refers to the accompanying drawings, which show by way of illustration specific embodiments in which the invention may be practiced. These embodiments will be described in detail for those skilled in the art in order to practice the present invention. It should be appreciated that various exemplary embodiments of the present invention are different from each other, but do not have to be exclusive. For example, specific shapes, structures, and characteristics described in the present specification may be implemented in another exemplary embodiment without departing from the spirit and the scope of the present invention in connection with an exemplary embodiment. In addition, it should be understood that a position or an arrangement of individual components in each disclosed exemplary embodiment may be changed without departing from the spirit and the scope of the present invention. Therefore, a detailed description described below should not be construed as being restrictive. In addition, the scope of the present invention is defined only by the accompanying claims and their equivalents if appropriate. Similar reference numerals will be used to describe the same or similar functions throughout the accompanying drawings.

Hereinafter, preferred embodiments of the present invention will be described in more detail with reference to the accompanying drawings.

FIG. 1 is a diagram illustrating a schematic configuration of a system for wireless Wi-Fi transmission of digital sound with a sound synchronization technology applied according to an embodiment of the present invention.

In the case of using the wireless digital transmission system of sound using Wi-Fi disclosed in Korea Patent Publication No. 10-2252541, which is the prior application of the present applicant, to output sound of a specific video, such as in a real drive-in theater, the system for wireless Wi-Fi transmission of digital sound with a sound synchronization technology applied according to the present invention solves the problem that a speed of audio gradually becomes slower or faster to maintain the synchronization of video and audio in an optimal state when receiving and outputting audio from a real-time streaming server via a wireless network on a device such as a smartphone.

Referring to FIG. 1, a wireless WiFi transmission system of digital sound with a sound synchronization technology applied according to an embodiment of the present invention includes a digital projection device 300, a streaming server 100, and a mobile device 200.

The digital projection device 300 may include a server device in the form of a box having a plurality of input/output terminals, and may store and output digital cinema content. For example, the digital projection apparatus 100 is a general digital projection system, and may scan a digitally recorded image signal on a screen and simultaneously reproduce a recorded sound signal.

The streaming server 100 is connected to the digital projection device 300 and converts and outputs digital cinema content received from the digital projection device 300.

The streaming server 100 may be in the form of a computer, a server, or an engine, and may be called other terms such as a device, an apparatus, a terminal, user equipment (UE), a mobile station (MS), a mobile terminal (MT), a user terminal (UT), a subscriber station (SS), a wireless device, personal digital assistant (PDA), a wireless modem, a handheld device, etc.

The streaming server 100 may adopt various types of operating systems, and may be loaded and execute a program for converting a sound signal according to a wireless digital transmission method of sound using Wi-Fi according to an embodiment of the present invention. For example, as the operating system, Linux, which is efficient in terms of memory usage, while processing sound signals in various formats, including Digital Cinema Initiatives (DCI) for digital cinema content, may be applied, but is not limited thereto, and window and MacOS may be applied.

The mobile device 200 is a device capable of communication and input/output of information, and may be equipped with, for example, a smart phone, a tablet PC, etc.

The mobile device 200 may be loaded with and execute an application for receiving and reproducing a sound signal, and may receive a sound signal streamed from the streaming server 100 using the corresponding application. In this case, the mobile device 200 may receive a sound signal streamed from the streaming server 100 through a Wi-Fi communication network, and it is preferable that a version of 802.11 ac or higher is applied to the Wi-Fi communication network. This is to prevent data transmission speed from being lowered even when a plurality of mobile devices 200 are simultaneously connected.

The mobile device 200 is connected to a sound output device through wired or wireless communication so that a sound signal of cinema content is output through the sound output device.

Here, the sound output device may be a speaker provided inside a vehicle, but is not limited thereto, and the type of the sound output device, such as a speaker provided in another device or a speaker installed in a movable form, is not limited thereto.

The system for synchronizing video and sound in wireless digital transmission of sound using Wi-Fi according to the embodiment of the present invention is applied to a drive-in theater system, and video signals of digital cinema content are output to a large screen provided outside the vehicle, and the sound signal of the digital content is output from a sound output device installed inside the vehicle or another sound output device provided in the drive-in theater system.

Here, by minimizing data processing steps through digital signal processing without modulation of a digital sound signal into an analog form, it is possible to minimize sound data loss or distortion, promote a sound quality improvement effect, and utilize a sound field effect.

In addition, by transmitting a sound signal through a Wi-Fi communication network to replace the existing FM communication method that violates the Enforcement Decree of the Radio Waves Act, it is possible to implement a legal drive-in theater operation, and furthermore, to prevent indiscriminate waste of radio wave resources.

Hereinafter, the method for wireless digital transmission of sound using Wi-Fi according to the embodiment of the present invention will be described in detail.

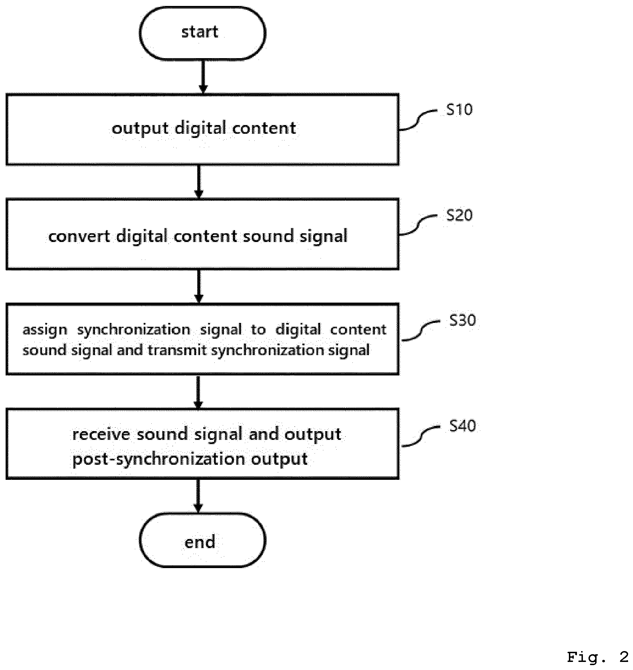

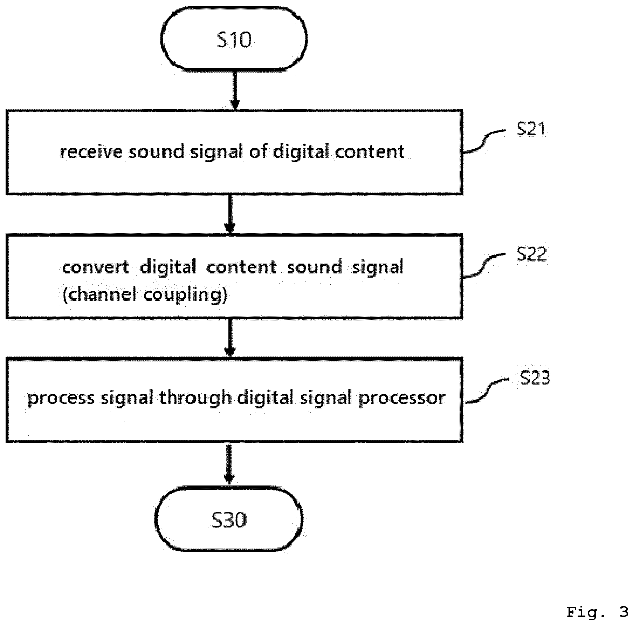

FIG. 2 is a flowchart of a method for wireless digital transmission of sound using Wi-Fi according to an embodiment of the present invention, and FIG. 3 is a detailed flowchart of step S20 of FIG. 2.

Referring to FIG. 2, the method for wireless digital transmission of sound using Wi-Fi according to the embodiment of the present invention may include outputting, by the digital projection device 300, digital cinema content according to digital cinema initiatives (DCI) for digital cinema content (S10), receiving and converting, by the streaming server 100, the sound signal of the digital cinema content output from the digital projection device 300 to transmit the converted sound signal to the mobile device 200 (S20), and receiving, by the mobile device 200, the sound signal from the streaming server 100 and outputting the received sound signal through the sound output device provided in the vehicle 30 or the drive-in theater system (S30) .

The outputting, by the digital projection device 300, the digital cinema content according to the DCI (S10) may include outputting, by the digital projection device 300, a video signal and a sound signal of the digital cinema content.

Here, the video signal of the digital cinema content may be projected onto a large screen provided in the drive-in theater.

Also, the sound signal of the digital cinema content may be input to the streaming server 100 through a cable connected to an output terminal of the digital projection device 300. In this case, the sound signal of the digital cinema content may adopt a DCI sound format. As illustrated in FIG. 1, the DCI sound format may include 16-channel PCM/WAV, a sample rate of 48 to 96 kHz, and a bit rate of 320 to 640 kbps, and a nonencrypted format may be applied.

Referring to FIG. 3, the receiving and converting, by the streaming server 100, the sound signal of the digital cinema content output from the digital projection device 300 and transmitting the converted signal to the mobile device 200 (S20) may include receiving, by the streaming server 100, the sound signal of the digital cinema content (S21), encoding the sound signal of the digital cinema content (S22), and transmitting the encoded sound signal to the mobile device 200 (S23).

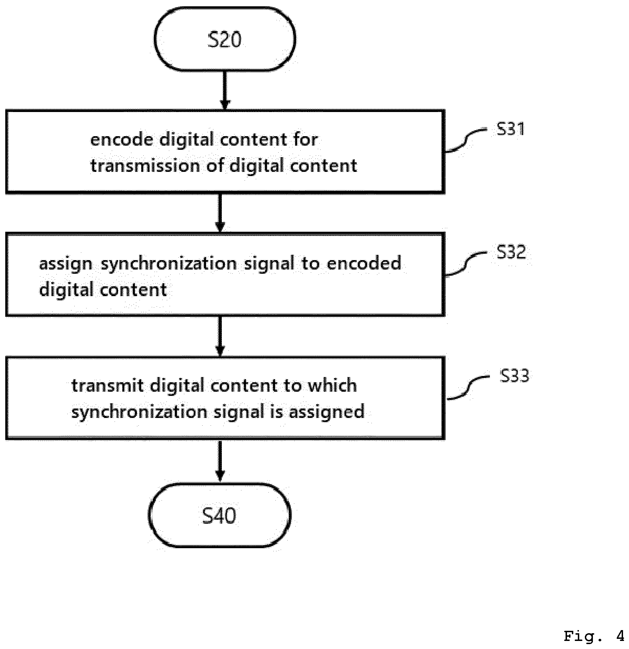

Referring to FIG. 4, the streaming server 100 transmitting to the mobile device 200 may include encoding a sound signal of a digital cinema content (S31), assigning a synchronization signal to the encoded digital content (S32), and transmitting the digital content to which the synchronization signal is assigned to the mobile device 200 (S33) .

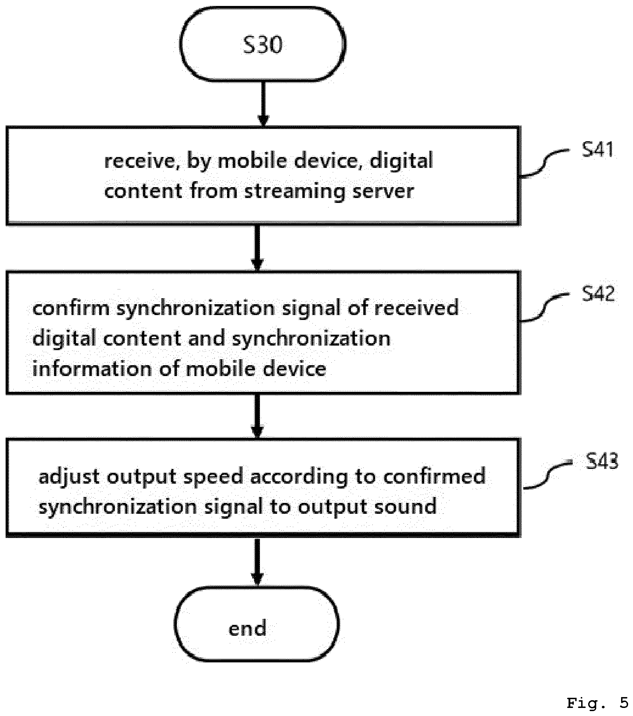

Referring to FIG. 5, the mobile device 200 includes receiving the digital content from the streaming server 100 (S41), checking the synchronization signal of the received digital content and the synchronization information of the mobile device (S42), and outputting the sound by adjusting the output speed according to the checked synchronization signal.

The streaming server 100 may be connected to the digital projection device 300 through a connection cable and receive the sound signal output from the digital projection device 300. In this case, the connection cable may be connected to the output terminal of the digital projection device 300 as described above, and it is recommended to adopt an AES/EBU method to prevent distortion or conversion of a 16-channel sound signal according to the DCI sound format.

The streaming server 100 may convert the sound signal received from the digital projection apparatus 300 into a form capable of being output from the mobile device 200 through a channel coupling method. That is, the streaming server 100 may convert the 16-channel sound signal according to the DCI sound format into a 2-channel sound signal. Table 1 below is an example of a channel coupling map used by the streaming server 100 to convert the 16-channel sound signal according to the DCI sound format into a 2-channel sound signal.

[Table 1]

| Channel No. | Default Setting Code for each sound channel in Digital Cinema Package | | | Channel Value after Channel Coupling (Stereo) | Remarks |
|---|---|---|---|---|---|
| | 5.1Ch Dolby Digital | 7.1Ch SDDS | 7.1 Ch DS | | |
| 1 | Left (Left Sound) | | | Left | |
| 2 | Right (Right Sound) | | | Right | |
| 3 | Center (Center Sound) | | | ½ Left + ½ Right | |
| 4 | LFE (Screen Low Frequency Effects) | | | ½ Left + ½ Right | |
| 5 | Left Surround | | Left Side Surround | Left | |
| 6 | Right Surround | | Right Side Surround | Right | |
| 7 | Hearing Impaired (Caption-related Signal for Hearing Impaired) | | | Deleted | |
| 8 | Visually Impaired narrative (Voice-related Signal for Visually Impaired) | | | Deleted | |
| 9 | - | Left Center | - | Left | |
| 10 | - | Right Center | - | Right | |
| 11 | - | - | Left rear Surround | Left | |
| 12 | - | - | Right rear Surround | Right | |
| 13 | Motion data (4D Chair Interlock Signal / Time Code) | | | Deleted | |
| 14 | Syns Signal (Used for Interlocking Erternal Device) | | | Deleted | |
| 15 | Sign Language Video (sign language signal channel for Hearing Impaired) | | | Deleted | |
| 16 | Spare Channel | | | Deleted | |

The streaming server 100 may encode the converted 2-channel sound signal into a form capable of real-time streaming.

In this case, it is preferable that the streaming server 100 encodes the sound signal into an OPUS form. The OPUS codec method has a fast encoding speed and there is no difference in quality according to bitrate. This is because, when compared to WAV, MP3, AAC, Real Audio, etc., the sound quality is the best.

The streaming server 100 may transmit the encoded sound signal to the mobile device 200. In this case, the sound signal processing device may stream the sound signal in a real-time protocol (RTP) method.

The real-time transmission protocol shows excellent performance in synchronization at a maximum delay speed of 80 ms, and since it is only responsible for the transmission of streaming data, one-way transmission from a server to a client is possible, so the resource consumption required for signal processing is low and thus a delay speed may be stably managed.

Here, the streaming server 100 may synchronize the video signal projected on the screen and the sound signal transmitted to the mobile device 200. A detailed synchronization method of the sound signal will be described later.

The receiving, by the mobile device 200, the sound signal from the streaming server 100 and outputting the sound signal through the sound output device provided in the vehicle 30 or the drive-in theater system may include receiving and outputting, by the mobile device 200, a sound signal streamed from the streaming server 100 through a Wi-Fi communication network.

The mobile device 200 may be loaded with an application for receiving and reproducing a sound signal and executed, and may receive the sound signal streamed from the streaming server 100 using the corresponding application. In this case, the mobile device 200 may receive the sound signal streamed from the streaming server 100 through the Wi-Fi communication network, and it is preferable that the version of 802.11 ac or higher is applied to the Wi-Fi communication network. This is to prevent data transmission speed from being lowered even when a plurality of mobile devices 200 are simultaneously connected.

The mobile device 200 may implement a codec for reproducing the sound signal in the OPUS form using the application for receiving and reproducing the sound signal, and may be connected to a sound output device provided inside the vehicle 30 or another sound output device provided in the drive-in theater system through wired or wireless communication such as aux, USB, or Bluetooth, thereby reproducing a sound signal through a speaker provided in the vehicle 30.

Meanwhile, as described above, the system for synchronizing video and sound in wireless digital transmission of sound using Wi-Fi according to the present invention may synchronize sound signals and video signals in various ways.

In one embodiment, the streaming server 100 may perform flow control on a time code of the sound signal output from the digital projection apparatus 100 to confirm whether there is a synchronization difference between the video signal projected on the screen and the sound signal transmitted to the mobile device 200. For example, the streaming server 100 may monitor the degree of change in the packet reception interval of the sound signal transmitted to the mobile device 200 using real-time control protocol (RTCP), and when the packet reception interval is confirmed to be greater than or equal to a threshold value, it may be considered that the synchronization difference between the video signal scanned on the screen and the sound signal transmitted to the mobile device 200 has occurred.

When the streaming server 100 confirms that there is the synchronization difference between the video signal scanned on the screen and the sound signal transmitted to the mobile device 200, the synchronization may be adjusted by streaming the sound signal on the time code of the video signal.

In one embodiment, the streaming server 100 transmits specific information data to the receiving device at every packet transmission, and the audio play app of the receiving device 200 may analyze the information data of the packet data being implemented/executed and the received packet data and cope with immediately when the synchronization is out of sync, thereby maintaining the synchronization of the video and audio in an optimal state.

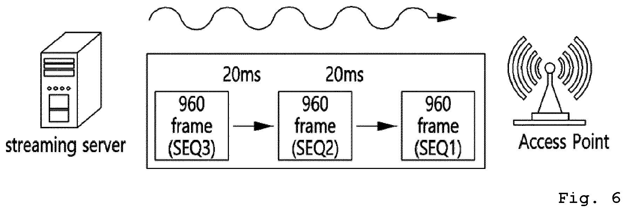

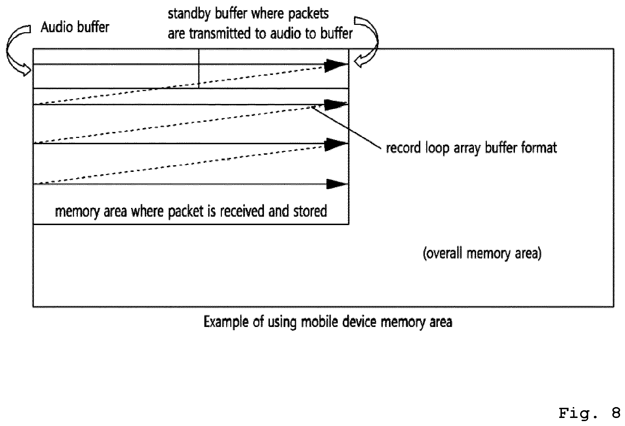

FIGS. 6 to 8 are diagrams illustrating a specific example of a method for synchronizing a sound signal and a video signal according to another embodiment of the present invention.

First, as illustrated in FIG. 6, the streaming server 100 transmits a packet in certain frame units to an access point with a packet number a little faster than video, and maintains a slight interval between packets when transmitting each packet (S100). For example, when the digital cinema sound is transmitted, sound is first transmitted up to 500 ms earlier than video according to a playback server specification, and is converted into packets in predetermined frame units to maintain sound quality. For example, 960 frames may be set as 1 packet, and the interval per packet may be set as 20 ms and transmitted. However, it is not limited to the above example, and depending on the environment, 480 frames, 1920 frames, and 2880 frames may be set as 1 packet, and the interval per packet may be set in various forms in consideration of environmental factors, such as setting to 20 ms in 960 frames, 10 ms in 480 frames, 40 ms in 1920 frames, and 60 ms in 2880 frames and performing transmission.

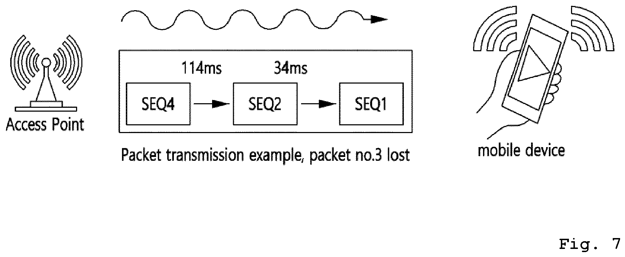

On the other hand, as illustrated in FIG. 7, problems such as packet loss and delayed reception may occur depending on the network environment and situation in the process of transmitting packets from the access point to the mobile device 200.

In order to solve this problem, the system according to the present invention records the received packets in the device memory in the form of a loop array as illustrated in FIG. 6 in the application of the mobile device. In this case, the total number of received packets and the stored packet location are recorded together. In addition, the sequence number is added to a packet header transmitted from the streaming server and transmitted, and the application of the mobile device confirms the sequence number after receiving the packet (S200).

The mobile device starts to play sound when the sum of the received packets recorded in the form of a loop array fills up the audio buffer of the memory (S300).

Since the size of the audio buffer differs depending on the device and the performance of the access point differs, a sound output timing control function may be implemented in the application so that a user may synchronize the video and sound of the mobile device by confirming the first video and the sound of the mobile device (first user synchronizes the video and sound once, S400).

From the time when the sound is implemented, the audio playback time and the currently implementing packet location are recorded (S500).

In the process of synchronizing video and sound in wireless digital transmission of sound using Wi-Fi according to the present invention described above, in most cases where the synchronization of video and audio is out of sync, the optimal synchronization technology is implemented according to the situation in each part of the system to solve the problem.

Hereinafter, a detailed algorithm of the synchronization adjustment method for each situation will be described.

1. A method for adjusting synchronization error according to network speed difference

In the step S100 described above, packets are transmitted at intervals of 20 ms based on 960 frames, and the audio playback time is confirmed as in ⑤. Therefore, it is possible to calculate the audio playback time/20 ms = the number of packets required for audio transmission (e.g., 1 second = 1000 ms = 50 packets).

While the streaming is in progress, the device application compares the required number of packets in ① above with the total number of received packets in real time.

In this case, 1-1) when the number of required packets is less than the total number of received packets (the number of required packets > the total number of received packets), it is determined that the transmitted packet has not been received yet due to the network speed delay. In this case, the application of the smart device refreshes the network of the device (reconnects after termination). In this case, the total number of packets calculated in step S200 described above increases by a certain number (for example, +1), and the packet location measured in step S500 described above is also adjusted to the packet increased by the corresponding packet.

On the other hand, 1-2) when the number of required packets is greater than the total number of received packets (the number of required packets < the total number of received packets), it is determined that packets congested due to the network speed delay rush in at once and are received. In this case, the application of the smart device refreshes the network of the device (reconnects after termination). In this case, the total number of packets calculated in step S200 described above decreases by a certain number (for example, -1), and the packet location measured in step S500 described above is also adjusted to the packet decreased by the corresponding packet.

2. Method for adjusting out of synchronization due to packet loss during network transmission

When the sequence number added to the packet header transmitted from the streaming server in step S200 described above and the sequence number confirmed in the application of the mobile device are not consecutive, the smart device determines this as a packet loss.

In this case, the lost packet in the mobile application is replaced by the next packet, transmits sound, and refreshes the network of the device (reconnect after termination).

3. When synchronization is out of sync due to buffer underrun caused by continuous network delay.

The buffer underrun is a case where there is not enough packet data left in the audio buffer because the size of the recorded packet buffer is smaller than the size of the audio buffer, and a plurality of mobile devices try to maintain packets in the buffer as much as possible by adjusting the output speed when such a buffer underrun occurs, so problems such as sound delay occur.

In order to prevent the above problem, the mobile device records a size of accumulated buffer data transmitted to the audio buffer from the memory where the packet is received, records a size of actual output and implemented audio data in the audio buffer, and calculates the size of the implemented audio data from the size of the accumulated buffer data to calculate a size of a buffer waiting for audio transmission.

The mobile device may compare the calculated size of the standby buffer with a minimum buffer size required to implement the sound, and when the size of the standby buffer is smaller than the size of the minimum buffer, record the same packet as the currently playing received packet once more, thereby prevent the underrun of the buffer.

In some other embodiments, the method for synchronizing video and sound in wireless digital transmission of sound using Wi-Fi according to another embodiment of the present invention may further include receiving and analyzing, by the streaming server 100, the evaluation of digital cinema content from the mobile device 200.

The streaming server 100 may request and receive an evaluation of digital cinema content through an application for receiving and reproducing sound signals executed in the mobile device 200. For example, the evaluation items may include input of comments on contents of the digital cinema content, input of comments on projection of the digital cinema contents, and the like, and evaluation result comments in the form of text for each item may be input.

The streaming server 100 may calculate the rating of the digital cinema content by analyzing the evaluation result text for the digital cinema content received from the mobile device 200.

For example, the streaming server 100 may build an artificial neural network that extracts contextual information from input data.

Here, the input data may be evaluation result text for digital cinema content.

The streaming server 100 may accumulate and store the evaluation result text for the digital cinema content received from the mobile device 200, and extract the stored evaluation result text for the digital cinema content as training data.

The streaming server 100 may build a neural network that extracts contextual information about the input data by learning the training data using the Word2Vec algorithm.

The Word2Vec algorithm may include a neural network language model (NNLM). The neural network language model is basically a neural network including an input layer, a projection layer, a hidden layer, and an output layer. The neural network language model is what is used to vectorize words. Since the neural network language model is a well-known technology, a detailed description thereof will be omitted.

The Word2vec algorithm is for text mining and is an algorithm that determines proximity by looking at the relationship between the front and back of each word. The Word2vec algorithm is an unsupervised learning algorithm.

As the name suggests, the Word2vec algorithm may be a metric technique that expresses the meaning of a word in a vector form. The Word2vec algorithm may represent each word as a vector in a space of about 200 dimensions. Using the Word2vec algorithm, a vector corresponding to a word may be obtained for each word.

The Word2vec algorithm may dramatically improve precision in the field of natural language processing compared to other conventional algorithms. The Word2vec may train the meaning of words by using the relationship between words in sentences of an input corpus and adjacent words. The Word2vec algorithm is based on an artificial neural network and starts from the premise that words with the same context have close meanings. The Word2vec algorithm performs training through text documents, and allows the artificial neural network to train, as related words, other words that appear nearby (about 5 to 10 words before and after) a word. Since words with related meanings are highly likely to appear close to each other in the document, two words may gradually have close vectors in the process of repeating learning.

The learning method of the Word2vec algorithm includes a continuous bag of words (CBOW) method and a skip-gram method. The CBOW method predicts a target word using the context created by surrounding words. The skip-gram method predicts words that may come around based on one word. For large datasets, the skip-gram method is known to be more accurate.

Therefore, in the embodiment of the present invention, the Word2vec algorithm using the skip-gram method is used. For example, when the training is successfully completed through the Word2vec algorithm, similar words in a high-dimensional space may be located nearby. According to the above-described Word2vec algorithm, the calculated vector value may be similar to a word having a closer distribution of neighboring words in a learning document, and words having similar calculated vector values may be regarded as similar. Since the Word2vec algorithm is a well-known technology, a detailed description of vector value calculation will be omitted.

The streaming server 100 may divide a rating level into a plurality, and set evaluation criterion text corresponding to each rating level. For example, the streaming server 100 may acquire evaluation standard text for each rating level by accessing an external server to which ratings have been assigned by experts according to the evaluation result of the digital cinema content.

The streaming server 100 may input evaluation criterion text for each rating level to the neural network, and extract reference vector values for each rating level representing context information about the evaluation standard text for each rating level.

The streaming server 100 may extract an evaluation result vector value representing context information by inputting the evaluation result text for the digital cinema content received from the mobile device 200 to the neural network.

The streaming server 100 may calculate a similarity between the evaluation result vector value and a plurality of reference vector values, and extract a reference vector value having the highest similarity with the evaluation result vector value among the plurality of reference vector values. In this case, as a similarity calculation method, a Euclidean distance, a cosine similarity, a Tanimoto coefficient, and the like may be adopted.

The streaming server 100 may calculate the rating level corresponding to the reference vector value having the highest similarity with the evaluation result vector value as the rating of the currently playing digital cinema content.

The streaming server 100 may match and store the calculated ratings of the digital cinema content, and may guide ratings for each digital cinema content through an application running on the mobile device 200.

In some other embodiments, the streaming server 100 extracts keywords from the evaluation result text (e.g., review data) for the digital cinema content received from the mobile device 200, and classifies a plurality of text data for each evaluation item as a result of comparing the extracted keywords with a pre-trained keyword dictionary.

The streaming server 100 calculates continuity scores between keywords extracted from text data classified into the same category, and extracts text data having a continuity score higher than a preset reference score as representative text data.

In this case, the continuity score is calculated according to Equation 1 below.

[Equation 1]

$$C_n = \log\left(\frac{v_{cn} - v_{fn}}{v_{bn}}\right) - \log\left(\frac{v_{cn} - v_{bn}}{v_{fn}}\right)$$

Here, $C_n$ denotes a continuity score of nth text data, $V_{cn}$ denotes an embedding vector of a keyword extracted from the nth text data, $V_{cf}$ denotes an embedding vector for a word immediately preceding the keyword extracted from the nth text data, and $V_{cb}$ denotes an embedding vector for the word immediately after the keyword extracted from the nth text data.

For example, when the nth text data is review data composed of words A, B, C, D, and E, and word C among the words is extracted as a keyword, $V_{cn}$ may be determined as an embedding vector for the word C, and $V_{cf}$ may be determined as an embedding vector for the word B, and $V_{cb}$ may be determined as an embedding vector for the word D.

Thereafter, the streaming server 100 calculates an individual evaluation score for each extracted representative text data, and calculates an average value for a plurality of individual evaluation scores as a final evaluation score of the digital cinema content.

In this case, the individual evaluation score is calculated according to Equation 2 below.

[Equation 2]

$$r_i = \sum_{j=1}^{k} \left( \frac{a_j \times v_j}{v_{zj}} \right)$$

Here, $r_i$ denotes an individual evaluation score of an i-th representative text data, $V_j$ denotes an embedding vector for a j-th word of the i-th representative text data, $V_{zj}$ denotes an average value of embedding vectors for words other than the j-th word of the i-th representative text data, and $a_j$ denotes a weight value for the j-th word of the i-th representative text data.

In this way, the streaming server 100 may improve the reliability of the evaluation result by calculating the evaluation score of the digital cinema content through big data analysis and the above Equation based on the text data collected for each digital cinema content.

As described above, the technology according to the present invention may be implemented as an application or implemented in the form of program instructions that may be executed through various computer components and recorded on a computer-readable recording medium. The computer-readable recording medium may include a program command, a data file, a data structure, or the like, alone or a combination thereof.

The program commands recorded in the computer-readable recording medium may be especially designed and constituted for the present invention or be known to those skilled in a field of computer software.

Examples of the computer-readable recording medium may include a magnetic medium such as a hard disk, a floppy disk, or a magnetic tape, an optical recording medium such as a compact disk read only memory (CD-ROM) or a digital versatile disk (DVD), a magneto-optical medium such as a floptical disk, and a hardware device specially configured to store and execute program commands, such as a read only memory (ROM), a random access memory (RAM), a flash memory, or the like.

Examples of the program commands include a highlevel language code capable of being executed by a computer using an interpreter, or the like, as well as a machine language code made by a compiler. The above-described hardware device may be constituted to be operated as one or more software modules to perform processing according to the present disclosure, and vice versa.

Although the embodiments of the present invention have been disclosed hereinabove, it may be understood by those skilled in the art that the present invention may be variously modified and altered without departing from the scope and spirit of the present invention described in the following claims.

**Claims**

1. A system for wireless Wi-Fi transmission of digital sound with sound synchronization technology applied ,comprising:

    a digital projection device that stores and outputs digital content;
    a streaming server that is connected to the digital projection device and transmitting digital cinema contents received from the digital projection device to an access point; and
    a mobile device that receives a sound signal of a digital cinema content transmitted from the streaming server through the access point, and is connected to a sound output device through wired or wireless communication so that a sound signal of the digital cinema content is output through the sound output device.

2. The system of claim 1, wherein the streaming server simultaneously supports digital output and general analog output of a sound signal so that they are used in a wireless transmission environment through existing FM, stores an analog audio signal in a buffer until a time when a digitally converted audio signal is output according to a program recorded in a built-in digital signal processor (DSP) so that a time difference between the digital and analog types does not occur, and simultaneously transmits the digitally converted audio signal and transmitting the analog audio signal.

3. The system of claim 1, wherein the streaming server converts an audio signal of the digital cinema content into a packet in units of predetermined frames, and transmits the converted packet to the access point before a video signal of the digital cinema content by a predetermined time, and transmits the converted packet to each packet to the access point along with a packet number assigned to each packet, and

the mobile device records a plurality of received packets in a form of a loop array, and records the total number of received packets and a storage location of the packets together, and
controls the sound to be played when the sum of the received packets recorded in the form of the loop array fills up an audio buffer in memory, but records an audio playback time and a currently implemented packet location from when the sound is implemented.

4. The system of claim 2, wherein the mobile device

1) calculates the required number n of packets, which is the number of packets required for audio transmission, and compares the required number of packets (n) and the total number t of received packets in real time while streaming is in progress,

determines that the transmitted packet has not yet been received due to a network speed delay when the required number of packets is less than the total number of received packets, and terminates and then reconnects the network, sets the total number of packets to t + 1, and corrects the packet location with packets increased by n,
determines that packets congested due to the network speed delay rushes in at once and received when the required number of packets is greater than the total number of received packets, terminates and reconnects the network, sets the total number of packets to t-1, and corrects the packet location with packets reduced by n,

2) determines that the packet is lost when a sequence number added to a packet header transmitted from the streaming server and a sequence number confirmed by an application of the mobile device are not consecutive, and transmits the sound by replacing a next packet of the lost packet, and terminates and then reconnects the network of the device, and
3) when there is not enough packet data left in the audio buffer because the recorded packet buffer size is less than an audio buffer size,

records a size of accumulated buffer data transmitted to the audio buffer from the memory where the packet is received, records a size of actual output and implemented audio data in the audio buffer, and calculates the size of the implemented audio data from the size of the accumulated buffer data to calculate a size of a buffer waiting for audio transmission, and
compares the calculated size of the standby buffer with a minimum buffer size required to implement the sound, and when the size of the standby buffer is smaller than the size of the minimum buffer, records the same packet as the currently playing received packet once more.

Fig. 1

start

output digital content — S10

convert digital content sound signal — S20

assign synchronization signal to digital content sound signal and transmit synchronization signal — S30

receive sound signal and output post-synchronization output — S40

end

Fig. 2

S10

receive sound signal of digital content — S21

convert digital content sound signal (channel coupling) — S22

process signal through digital signal processor — S23

S30

Fig. 3

S20

encode digital content for
transmission of digital content — S31

assign synchronization signal to encoded
digital content — S32

transmit digital content to which
synchronization signal is assigned — S33

S40

Fig. 4

S30

receive, by mobile device, digital
content from streaming server — S41

confirm synchronization signal of received
digital content and synchronization
information of mobile device — S42

adjust output speed according to confirmed
synchronization signal to output sound — S43

end

Fig. 5

Fig. 6

Access Point

114ms    34ms

SEQ4 → SEQ2 → SEQ1

Packet transmission example, packet no.3 lost

mobile device

Fig. 7

standby buffer where packets
are transmitted to audio to buffer

Audio buffer

record loop array buffer format

memory area where packet is received and stored

(overall memory area)

Example of using mobile device memory area

Fig. 8

**EP 4 418 660 A1**

Europäisches
Patentamt

European
Patent Office

Office européen
des brevets

# EUROPEAN SEARCH REPORT

Application Number

EP 23 16 7530

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/344973 A1 (GALLOWAY VANCE WILLIAM [US]) 4 November 2021 (2021-11-04) | 1,2 | INV. H04N21/242 |
| Y | * abstract * * figures 3, 5 * * paragraphs [0003], [0029] - [0034], [0038] * | 3,4 | H04N21/414 H04N21/43 H04N21/439 H04N21/8547 H04L65/75 |
| | ----- | | |
| X | WO 2017/183015 A1 (MUVIX MEDIA NETWORKS LTD [IL]) 26 October 2017 (2017-10-26) * page 1, lines 1, 2 * * page 2, lines 13-21 * * page 4, lines 10-24 * * page 6, lines 10-16 * * page 16, line 23 - page 17, line 15 * * page 18, lines 3-8 * * figures 1, 2 * | 1 | |
| | ----- | | |
| Y | US 10 080 061 B1 (KIRLEY JOSEPH F [US]) 18 September 2018 (2018-09-18) * abstract * * column 20, lines 7-52 * | 3 | |
| | ----- | | TECHNICAL FIELDS SEARCHED (IPC) |
| Y | US 2017/289246 A1 (GATES GREGORY S [US] ET AL) 5 October 2017 (2017-10-05) * figures 3, 4, 6 * * paragraphs [0003], [0004], [0021] - [0029] * | 4 | H04N H04L |
| | ----- | | |

The present search report has been drawn up for all claims

| Place of search | Date of completion of the search | Examiner |
|---|---|---|
| The Hague | 21 August 2023 | Troya Chinchilla, A |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 23 16 7530

This annex lists the patent family members relating to the patent documents cited in the above-mentioned European search report.
The members are as contained in the European Patent Office EDP file on
The European Patent Office is in no way liable for these particulars which are merely given for the purpose of information.

21-08-2023

| Patent document cited in search report | | Publication date | Patent family member(s) | | Publication date |
|---|---|---|---|---|---|
| US 2021344973 | A1 | 04-11-2021 | NONE | | |
| WO 2017183015 | A1 | 26-10-2017 | EP | 3446310 A1 | 27-02-2019 |
| | | | US | 2019132621 A1 | 02-05-2019 |
| | | | WO | 2017183015 A1 | 26-10-2017 |
| US 10080061 | B1 | 18-09-2018 | US | 10080061 B1 | 18-09-2018 |
| | | | US | 2019090028 A1 | 21-03-2019 |
| US 2017289246 | A1 | 05-10-2017 | EP | 3440828 A1 | 13-02-2019 |
| | | | US | 2017289246 A1 | 05-10-2017 |
| | | | US | 2020358849 A1 | 12-11-2020 |
| | | | WO | 2017176728 A1 | 12-10-2017 |

EPO FORM P0459

For more details about this annex : see Official Journal of the European Patent Office, No. 12/82

**EP 4 418 660 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 102252541